# EUROPEAN PATENT SPECIFICATION

(11) **EP 3 601 032 B1**
(45) Date of publication and mention of the grant of the patent: **23.02.2022**
(21) Application number: 18719436.0
(22) Date of filing: 28.03.2018
(51) Int. Cl.: B63B 23/02, B63B 23/10, B63B 23/40, H02K 7/18

(54) **EMERGENCY DRIVE DEVICE FOR LIFE-SAVING EQUIPMENT DAVITS**
NOTANTRIEBSVORRICHTUNG FÜR DAVITS EINER LEBENSRETTENDEN AUSRÜSTUNG
DISPOSITIF D'ENTRAÎNEMENT DE SECOURS POUR BOSSOIRS D'ÉQUIPEMENT DE SAUVETAGE

(30) Priority: 31.03.2017 ES 201700362
(43) Date of publication of application: 05.02.2020
(73) Proprietor: Heron Davits AS, 5472 Seimsfoss (NO)
(72) Inventor: TVEIT, Ørjan, 5059 Bergen (NO)
(74) Representative: Torggler & Hofmann Patentanwälte - Innsbruck
(86) International application number: PCT/EP2018/000129
(87) International publication number: WO 2018/166655

(56) References cited:
- DE-C- 747 656
- DE-U1- 20 304 421
- DE-U1-202010 011 257
- GB-A- 359 222
- JP-A- 2013 023 203
- JP-A- 2013 078 452

## Description

### OBJECT OF THE INVENTION

The present invention relates to a davit of life saving equipment with an emergency drive device in the case of absence of electrical power (a situation referred to as 'dead ship' in the corresponding technical sector) in a ship, platform (for example, oil rig) or any other possible location of the davit bearing the life-saving equipment.

### BACKGROUND OF THE INVENTION

The stowage and launching of life-saving equipment (emergency boats, life rafts, etc) from ships or other types of platform (quays, oil rigs, etc) is realised by means of complex hoists, known as davits in the corresponding technical sector, which have evolved with the passage of time.

In the present situation, said davits usually comprise a mobile frame provided with one or more upper arms for suspension, raising or launching of the boat, supported by the corresponding column or columns, they in turn being provided with a supporting base or soleplate upon a fixed part of the ship, usually the deck thereof, such that by means of the movement of the davit between two extreme positions the boat is parked inboard of the side or alternatively hanging outboard such as to then lower it by means of cables of those hanging from the upper arms. In other types of davits said frame is fixed, the davit presenting solely the movements of raising and lowering the boat.

The drive of the davit, to move the davit out from the storage position to the launching position, is currently realised principally by means of hydraulic cylinders (there being other variants doing so by gravity or through rotation) and the applicant of the present patent is also owner of other patent applications proposing purely electrical drives having the corresponding electric motors and without hydraulics. Nevertheless, logically, the pumps of the hydraulic units of the drive cylinders utilised currently are also provided with the corresponding electric actuation motors.

In the case of absence of electrical power in a ship or platform (a situation known as 'dead ship' in the particular technical sector) the drive (both to move the boat out to the launching position and for the raising of the boat) of the hydraulic davits is currently realised by means of hydraulic accumulators precharged with pressure such that they have the power necessary for the actuation of the cylinders in the case of dead ship. The systems also include a manual pump to recharge the pressure of the accumulators in the case of necessity.

However, the utilisation of hydraulic drives signifies an environmental risk in the case of ruptures of flexible hoses or seals, this involving spillage of the hydraulic fluid to the exterior, presenting the aggravating factor that the hydraulic accumulator, on having typical elements with respect to the conventional hydraulic drive thereof, increases this risk. Furthermore, the accumulators also present the problem of risk of explosion or accident, by virtue of the fact that they are under pressure.

Document DE 20 2010 011 257 U1 discloses a davit with an electric motor.

### DESCRIPTION OF THE INVENTION

The emergency drive device for davits of the invention is applied to davits comprising at least one electric motor for the actuation thereof (direct or for actuating hydraulic pumps) and, according to the invention, it comprises:
- at least one manually driven generator, and
- at least one voltage adapter to adapt the voltage generated in the generator for actuation of the motor or motors of the davit.

In this manner, in the case of dead ship or of problems in hydraulic systems, it will always be possible to drive the davit. It is conceived principally to move the davit out to the launching position, although it is also valid for raising a boat when it is on the sea.

The following are furthermore obtained as advantages of the proposed configuration:
- Elimination of the hydraulic accumulators and of the associated environmental problems.

Seeking the foregoing, further advantages have been encountered:
- Greater efficiency with respect of the hydraulic systems. Less effort is required to move the davit out with respect to the hydraulic systems.
- Greater charging rapidity.
- Less weight through dispensing with the hydraulic accumulators. This furthermore permits it being situated within the davit in any position, whether as an assembly or by separating the different components from one another (the accumulators are normally situated in the lower part of the davit or upon the deck itself, by virtue of the great weight thereof), including proximate to or within the electric cabinet.
- The space occupied within the davit is reduced in a substantial manner.
- It is not necessary to dispose of a hydraulic system (less weight).
- There are no systems under pressure (greater safety, improvement for transportation and for commissioning, etc).
- Greater facility in controlling the correct filling of the system and the degree of availability thereof, it being possible to have the components both within and without the davit (in hydraulic systems it is best to have the components visible for better maintenance and inspection).
- Greater facility for installing the components within the davit (the accumulators are very heavy and difficult to handle).
- Much quieter system.
- Much less maintenance.
- Easily scalable (version with several cranks and generators to charge several supercapacitors in a simultaneous manner), to reduce even further the time required to move out or recover the boat.
- It is possible to regulate the effort applied for the generation.
- Simplification of the mechanical system.
- Absence of nitrogen in the hydraulic accumulators.

Moreover, in addition to the foregoing, the advantage has been encountered that it may be complemented by the existing system of movement of the davit (utilising the same electric motor, the same frequency variator, the existing mechanical parts, etc) without the necessity of including new components (hydraulic accumulators) and the three-phase motor might also be directly driven by the generator, if the latter is three-phase and adapted to the characteristics of the motor.

### DESCRIPTION OF THE DRAWINGS

Figure 1 shows a lateral view of an electrically driven davit in launching position.
Figure 2 shows a diagram of a first variant of the device of the invention.
Figure 3 shows a diagram of a second variant of the device of the invention.

### PREFERENTIAL EMBODIMENT OF THE INVENTION

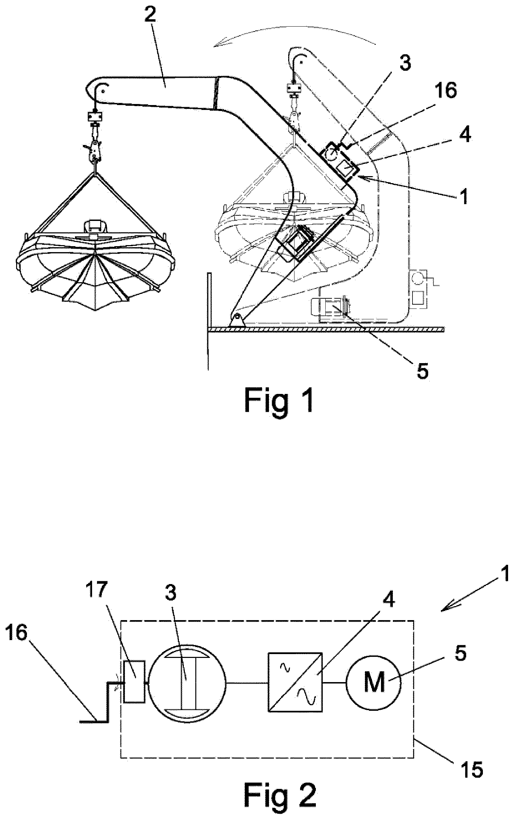

The emergency drive device (1) for davits (2) of the invention is applied to davits (2) (see fig. 1) comprising at least one electric motor (5) in the drive thereof, and according to the invention it comprises:
- at least one manually driven generator (3), and
- at least one voltage adapter (4) to adapt the voltage generated in the generator (3) for actuating the motor or motors (5) of the davit (2).

The adapter (4) may be a voltage booster, utilisable if the generator (3) and the motor (5) are three-phase, or it may be a frequency converter, utilisable in the majority of cases.

In this manner, energy utilisable to actuate the motors (5) is available, whether directly driving the davit (2) or driving the hydraulic pumps, not shown, of actuation of drive cylinders of the davit (2), or to raise the boat in dead ship situations, but also in any other situation.

Preferentially, the generator (3) comprises a three-phase alternating current generator by virtue of the fact that the drive motors of the davits or of the hydraulic pumps are very robust squirrel-cage three-phase alternating current motors. In this case the adapter (4) may be a voltage booster or a frequency converter. Furthermore, it is preferred that the generator (3) comprises a generator having permanent magnets.

In a first variant of the invention, shown diagrammatically in fig. 2, the input of the voltage adapter (4) is directly connected to the generator (3), and the output thereof is directly connected to the three-phase motor (5) driving the davit (2). In this manner the batteries may be dispensed with. In this case, as aforesaid, the adapter (4) may be a voltage booster or a frequency converter.

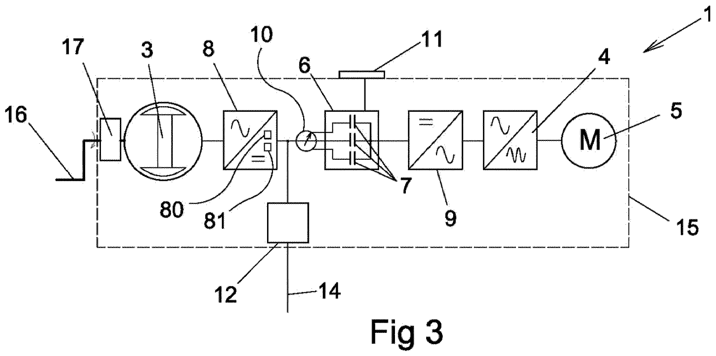

Another, second, variant of embodiment of the invention, shown diagrammatically in fig. 3, comprises at least one battery (6) connected to the output of the generator (3), providing therebefore a rectifier (8) of alternating current to direct current, by virtue of the fact that the capacitors for storage of energy for subsequent recovery require a direct current supply, and providing the frequency converter (4) at the output from the battery (6) such as to be able to feed the three-phase motor (5) driving the davit, if it accepts the direct current input thereof, or, in the contrary case, intercalating a DC/AC converter (9) connected to the input of the frequency converter (4), being precisely the case shown in fig. 3. The operating frequency of the motor (5) during the emergency operation is configured such that it is very low in order that the current required be small (in a proportional manner to the power demanded by the system).

In a very preferential manner, the battery (6) comprises a supercapacitor (7) or a battery of supercapacitors (7), being the embodiment shown in fig. 3, although it may be a matter of any other type of battery, not shown. The following advantages are obtained from the utilisation of supercapacitors:
- Rapidity of charging/discharging.
- They are capable of supplying greater power than the accumulators.
- They can provide high charging currents.
- High number of charging/discharging cycles.
- Very reduced maintenance.
- They operate under very adverse conditions of temperature.
- Electrical efficiency approaching 98%. Furthermore, as they lack toxic elements in their composition it is very much safer from the environmental point of view.

For its part, the rectifier (8) may comprise a filter (80) and preferentially it may also comprise a direct current voltage adapter (81) should it be necessary to raise the output voltage from the generator.

The optional disposition is provided of an individual charging selector (10) of the different elements of the battery (6) such as to charge the same individually without having to utilise a voltage booster, and having a lower demand in respect of manual actuation.

The disposition has also been provided of an indicator (11) (for example a screen) to display the state of charge of the battery (6) and to observe whether it is sufficient or whether manual actuation must be proceeded to.

In addition, the disposition is provided of a charger (12) of the battery (6) connected to the power network (14) of the ship, such as to always have the elements of the battery correctly charged whilst current exists in the power network (14).

In terms of the frequency converter (4), a model may be utilised directly permitting the supply of direct current, presenting the advantage of the inclusion of an exclusive DC/AC converter not being required.

It has been envisaged that all the components of the device (1) may be disposed in a case (15), such that they be held together modularly, which may be located within the interior or upon the exterior of the davit, the manual drive always being accessible to the operator in any position. There also exists the option of having the components dispersed in the case of necessity to take better advantage of the space available (they may even be within the electrical cabinet of the davit).

With reference to the manual actuation, the disposition of a crank (16) is preferentially provided for this purpose, furthermore ideally the same will be adjustable. In addition, between the manual actuating crank (16) and the generator (3), there may be optionally disposed a multiplying transmission (17) to increase the revolutions.

## Claims

1. Davit (2) of life-saving equipment comprising at least one electric motor (5) actuating the davit (2) and an emergency drive device (1), **characterised in that** emergency drive device (1) comprises:
- at least one manually driven generator (3), and
- at least one voltage adapter to adapt the voltage generated in the generator (3) for actuating the motor or motors (5) of the davit (2).

2. Davit (2) of life-saving equipment according to claim 1, **characterised in that** the adapter (4) is selected from among:
- a frequency converter, or
- a voltage booster.

3. Davit (2) of life-saving equipment according to any of the foregoing claims, **characterised in that** the generator (3) comprises an alternating current three-phase generator.

4. Davit (2) of life-saving equipment according to any of the foregoing claims, **characterised in that** the generator (3) comprises a generator having permanent magnets.

5. Davit (2) of life-saving equipment according to any of claims 2 to 4, **characterised in that** the input of the adapter (4) is directly connected to the generator (3) and the output thereof is directly connected to the three-phase motor (5) of actuation of the davit (2).

6. Davit (2) of life-saving equipment according to any of claims 2 to 4, **characterised in that** comprises at least one battery (6) connected to the output of the generator (3), providing therebefore a rectifier (8) of alternating current to direct current, and providing at the output of the battery (6) an adapter (4), based upon a frequency converter having an input adapted to direct current such as to be able to supply the three-phase motor (5) of the actuation of the davit (2).

7. Davit (2) of life-saving equipment according to any of claims 2 to 4, **characterised in that** it comprises at least one battery (6) connected to the output from the generator (3), providing therebefore a rectifier (8) of alternating current to direct current, and providing at the outlet from the battery (6) a DC/AC converter (9) connected to the input of an adapter (4) based upon a frequency converter having input not adapted to direct current such as to be able to supply the three-phase motor (5) of the drive of the davit (2).

8. Davit (2) of life-saving equipment according to claim 6 or 7, **characterised in that** the battery (6) comprises an electric battery.

9. Davit (2) of life-saving equipment according to claim 6 or 7, **characterised in that** the battery (6) comprises a supercapacitor (7) or a battery of supercapacitors (7).

10. Davit (2) of life-saving equipment according to any of the foregoing claims 6 to 9, **characterised in that** the rectifier (8) comprises a filter (80) and/or a direct current voltage adapter (81).

11. Davit (2) of life-saving equipment according to any of claims 6 to 10, **characterised in that** it comprises an individual charging selector (10) of the different elements of the battery (6) to charge the said elements without having to utilise a voltage booster.

12. Davit (2) of life-saving equipment according to any of claims 6 to 11, **characterised in that** it comprises an indicator (11) of the state of charge of the battery (6).

13. Davit (2) of life-saving equipment according to any of claims 6 to 12, **characterised in that** it additionally comprises a charger (12) of battery (6) connected to a power network (14) such as to always have the elements of the battery correctly charged whilst current exists in said power network (14).

14. Davit (2) of life-saving equipment according to any of the foregoing claims, **characterised in that** it comprises a case (15) holding all the components thereof.

15. Davit (2) of life-saving equipment according to any of the foregoing claims, **characterised in that** the emergency drive device (1) comprises a manual actuation and the manual actuation comprises a driving crank (16).

16. Davit (2) of life-saving equipment according to claim 15, **characterised in that** the crank (16) is adjustable.

17. Davit (2) of life-saving equipment according to any of the claims 15 or 16, **characterised in that** between the manual actuating crank (16) and the generator (3) there is disposed a multiplying transmission (17) to increase the revolutions.

## Patentansprüche

1. Davit (2) einer lebensrettenden Ausrüstung umfassend wenigstens einen Elektromotor (5), welcher den Davit (2) betätigt, und eine Notantriebsvorrichtung (1), **dadurch gekennzeichnet, dass** die Notantriebsvorrichtung (1) umfasst:
- wenigstens einen manuell angetriebenen Generator (3), und
- wenigstens einen Spannungsadapter zur Anpassung der im Generator (3) generierten Spannung zur Betätigung des Motors oder der Motoren (5) des Davits (2).

2. Davit (2) einer lebensrettenden Ausrüstung nach Anspruch 1, **dadurch gekennzeichnet, dass** der Adapter (4) ausgewählt wird aus:
- einem Frequenzumwandler, oder
- einem Spannungsverstärker.

3. Davit (2) einer lebensrettenden Ausrüstung nach einem der vorangehenden Ansprüche, **dadurch gekennzeichnet, dass** der Generator (3) einen Wechselstrom-Drehstromgenerator umfasst.

4. Davit (2) einer lebensrettenden Ausrüstung nach einem der vorangehenden Ansprüche, **dadurch gekennzeichnet, dass** der Generator (3) einen Generator mit Permanentmagneten umfasst.

5. Davit (2) einer lebensrettenden Ausrüstung nach einem der Ansprüche 2 bis 4, **dadurch gekennzeichnet, dass** der Eingang des Adapters (4) direkt mit dem Generator (3), und der Ausgang desselben direkt mit dem Drehstrommotor (5) zur Betätigung des Davits (2) verbunden ist.

6. Davit (2) einer lebensrettenden Ausrüstung nach einem der Ansprüche 2 bis 4, **dadurch gekennzeichnet, dass** er wenigstens eine Batterie (6) umfasst, die mit dem Ausgang des Generators (3) verbunden ist, wobei davor ein Gleichrichter (8) von Wechselstrom zu Gleichstrom vorgesehen ist, und am Ausgang der Batterie (6) ein Adapter (4) vorgesehen ist, der auf einem Frequenzwandler mit einem an Gleichstrom angepassten Eingang basiert, um den Drehstrommotor (5) für die Betätigung des Davits (2) versorgen zu können.

7. Davit (2) einer lebensrettenden Ausrüstung nach einem der Ansprüche 2 bis 4, **dadurch gekennzeichnet, dass** er wenigstens eine Batterie (6) umfasst, die mit dem Ausgang des Generators (3) verbunden ist, wobei davor ein Gleichrichter (8) von Wechselstrom zu Gleichstrom vorgesehen ist, und am Ausgang der Batterie (6) ein DC/AC-Wandler (9) vorgesehen ist, der mit dem Eingang eines Adapters (4) verbunden ist, der auf einem Frequenzwandler mit nicht an Gleichstrom angepasstem Eingang basiert, um den Drehstrommotor (5) des Antriebs des Davits (2) versorgen zu können.

8. Davit (2) einer lebensrettenden Ausrüstung nach Anspruch 6 oder 7, **dadurch gekennzeichnet, dass** die Batterie (6) eine elektrische Batterie umfasst.

9. Davit (2) einer lebensrettenden Ausrüstung nach Anspruch 6 oder 7, **dadurch gekennzeichnet, dass** die Batterie (6) einen Superkondensator (7) oder eine Batterie von Superkondensatoren (7) umfasst.

10. Davit (2) einer lebensrettenden Ausrüstung nach einem der vorangehenden Ansprüche 6 bis 9, **dadurch gekennzeichnet, dass** der Gleichrichter (8) ein Filter (80) und/oder einen Gleichspannungsadapter (81) umfasst.

11. Davit (2) einer lebensrettenden Ausrüstung nach einem der Ansprüche 6 bis 10, **dadurch gekennzeichnet, dass** er einen individuellen Ladewahlschalter (10) der verschiedenen Elemente der Batterie (6) umfasst, um die besagten Elemente zu laden, ohne einen Spannungsverstärker verwenden zu müssen.

12. Davit einer lebensrettenden Ausrüstung (2) nach einem der Ansprüche 6 bis 11, **dadurch gekennzeichnet, dass** er eine Anzeige (11) für den Ladezustand der Batterie (6) umfasst.

13. Davit (2) einer lebensrettenden Ausrüstung nach einem der Ansprüche 6 bis 12, **dadurch gekennzeichnet, dass** er zusätzlich ein Ladegerät (12) für Batterie (6) umfasst, das mit einem Stromnetz (14) verbunden ist, sodass die Elemente der Batterie immer korrekt geladen sind, während Strom in benanntem Stromnetz (14) vorhanden ist.

14. Davit (2) einer lebensrettenden Ausrüstung nach einem der vorangehenden Ansprüche, **dadurch gekennzeichnet, dass** er ein Gehäuse (15) umfasst, in dem alle Komponenten derselben untergebracht sind.

15. Davit (2) einer lebensrettenden Ausrüstung nach einem der vorhergehenden Ansprüche, **dadurch gekennzeichnet, dass** die Notantriebsvorrichtung (1) eine manuelle Betätigung aufweist, und die manuelle Betätigung eine Antriebskurbel (16) umfasst.

16. Davit (2) einer lebensrettenden Ausrüstung nach Anspruch 15, **dadurch gekennzeichnet, dass** die Kurbel (16) verstellbar ist.

17. Davit (2) einer lebensrettenden Ausrüstung nach einem der Ansprüche 15 oder 16, **dadurch gekennzeichnet, dass** zwischen der manuellen Betätigungskurbel (16) und dem Generator (3) ein Übersetzungsgetriebe (17) zur Erhöhung der Umdrehungen verfügbar ist.

## Revendications

1. Bossoir (2) d'équipement de sauvetage comprenant au moins un moteur électrique (5) actionnant le bossoir (2) et un dispositif d'entraînement de secours (1), **caractérisé en ce que** le dispositif d'entraînement de secours (1) comprend :
- au moins un générateur entraîné manuellement (3), et
- au moins un adaptateur de tension pour adapter la tension générée dans le générateur (3) pour actionner le moteur ou les moteurs (5) du bossoir (2).

2. Bossoir (2) d'équipement de sauvetage selon la revendication 1, **caractérisé en ce que** l'adaptateur (4) est sélectionné parmi :
- un convertisseur de fréquence, ou
- un amplificateur de tension.

3. Bossoir (2) d'équipement de sauvetage selon l'une quelconque des revendications précédentes, **caractérisé en ce que** le générateur (3) comprend un générateur triphasé de courant alternatif.

4. Bossoir (2) d'équipement de sauvetage selon l'une quelconque des revendications précédentes, **caractérisé en ce que** le générateur (3) comprend un générateur comportant des aimants permanents.

5. Bossoir (2) d'équipement de sauvetage selon l'une quelconque des revendications 2 à 4, **caractérisé en ce que** l'entrée de l'adaptateur (4) est directement reliée au générateur (3) et la sortie de celui-ci est directement reliée au moteur triphasé (5) d'actionnement du bossoir (2).

6. Bossoir (2) d'équipement de sauvetage selon l'une quelconque des revendications 2 à 4, **caractérisé en ce qu'**il comprend au moins une batterie (6) reliée à la sortie du générateur (3), en fournissant avant celle-ci un redresseur (8) de courant alternatif en courant continu, et en fournissant, à la sortie de la batterie (6), un adaptateur (4), sur la base d'un convertisseur de fréquence ayant une entrée adaptée au courant continu de manière à pouvoir alimenter le moteur triphasé (5) d'actionnement du bossoir (2).

7. Bossoir (2) d'équipement de sauvetage selon l'une quelconque des revendications 2 à 4, **caractérisé en ce qu'**il comprend au moins une batterie (6) reliée à la sortie du générateur (3), en fournissant avant celle-ci un redresseur (8) de courant alternatif en courant continu, et en fournissant, à la sortie de la batterie (6), un convertisseur CC-CA (9) relié à l'entrée d'un adaptateur (4) sur la base d'un convertisseur de fréquence ayant une entrée non adaptée au courant continu de manière à pouvoir alimenter le moteur triphasé (5) d'entraînement du bossoir (2).

8. Bossoir (2) d'équipement de sauvetage selon la revendication 6 ou 7, **caractérisé en ce que** la batterie (6) comprend une batterie électrique.

9. Bossoir (2) d'équipement de sauvetage selon la revendication 6 ou 7, **caractérisé en ce que** la batterie (6) comprend un supercondensateur (7) ou une batterie de supercondensateurs (7).

10. Bossoir (2) d'équipement de sauvetage selon l'une quelconque des revendications 6 à 9, **caractérisé en ce que** le redresseur (8) comprend un filtre (80) et/ou un adaptateur de tension de courant continu (81).

11. Bossoir (2) d'équipement de sauvetage selon l'une quelconque des revendications 6 à 10, **caractérisé en ce qu'**il comprend un sélecteur de chargement individuel (10) des différents éléments de la batterie (6) pour charger lesdits éléments sans avoir à utiliser un amplificateur de tension.

12. Bossoir (2) d'équipement de sauvetage selon l'une quelconque des revendications 6 à 11, **caractérisé en ce qu'**il comprend un indicateur (11) de l'état de charge de la batterie (6).

13. Bossoir (2) d'équipement de sauvetage selon l'une quelconque des revendications 6 à 12, **caractérisé en ce qu'**il comprend en outre un chargeur (12) de batterie (6) relié à un réseau électrique (14) de telle sorte que les éléments de la batterie soient toujours correctement chargés pendant qu'il existe du courant dans ledit réseau électrique (14).

14. Bossoir (2) d'équipement de sauvetage selon l'une quelconque des revendications précédentes, **caractérisé en ce qu'**il comprend un boîtier (15) contenant tous les composants de celui-ci.

15. Bossoir (2) d'équipement de sauvetage selon l'une quelconque des revendications précédentes, **caractérisé en ce que** le dispositif d'entraînement d'urgence (1) comprend un actionnement manuel et l'actionnement manuel comprend une manivelle d'entraînement (16).

16. Bossoir (2) d'équipement de sauvetage selon la revendication 15, **caractérisé en ce que** la manivelle (16) est ajustable.

17. Bossoir (2) d'équipement de sauvetage selon la revendication 15 ou 16, **caractérisé en ce que**, entre la manivelle d'actionnement manuel (16) et le générateur (3), il est disposé une transmission de multiplication (17) pour augmenter les tours.
